# EUROPEAN PATENT SPECIFICATION

(11) **EP 3 758 662 B1**
(45) Date of publication and mention of the grant of the patent: **20.04.2022**
(21) Application number: 19705820.9
(22) Date of filing: 14.01.2019
(51) Int. Cl.: A61G 5/06, A61G 5/10, B66B 9/08, B62D 55/075

(54) **TRACKED STAIR CLIMBER**
TREPPENSTEIGMASCHINE MIT SCHIENE
MONTE-ESCALIER À CHENILLES

(30) Priority: 15.01.2018 IT 201800000933
(43) Date of publication of application: 06.01.2021
(73) Proprietor: Antano Group S.r.l., 06064 Foligno (PG) (IT)
(72) Inventor: MANCINELLI, Vincenzo, 06064 Foligno (PG) (IT)
(74) Representative: Ercolani, Simone Pietro
(86) International application number: PCT/IB2019/050276
(87) International publication number: WO 2019/138387

(56) References cited:
- US-A- 4 566 550
- US-A- 4 627 508

## Description

### FIELD OF THE INVENTION

The present invention related to a tracked stair climber.

Specifically, the stair climber concerned is used to lift, or lower, wheelchairs along fixed type staircases. More in detail, such a stair climber uses a tracked device adapted to promote the lifting and lowering of the wheelchair to be carried along a staircase.

### KNOWN PRIOR ART

Such typology stair climbers are known from the art, which comprise a supporting frame, a maneuvering tiller constrained to the frame, and a tracked movement device combined with the frame to displace the stair climber along a staircase, or along a sliding plane. Usually the maneuvering tiller is rotatably constrained to the frame between a first non-operative vertical position and a tilted-back operative position, to carry a wheelchair along a staircase, or along a sliding plane. In this case the wheelchair is firmly constrained to the maneuvering tiller during the displacement of the stair climber.

However, such a stair climber is not free from drawbacks, in fact it is rather bulky especially when the stair climber has to be turned in cramped spaces such as, for example, a staircase landing or the like. In such circumstances, the tracks being in contact with the stair climber sliding plane do not allow the stair climber to be rotated on itself. This is clearly a drawback that significantly limits the popularity and the use of such tracked stair climbers.

In any case, tracked stair climbers are known that implement solutions to settle the afore depicted bulk issues on cramped spaces.

For example, the tracked stair climber described in the Italian Patent N. MC2007A000216 in name of the Applicant describes a stair climber comprising a supporting frame, a maneuvering tiller constrained to the frame, and a tracked movement device combined with the frame to displace the stair climber along a staircase, or along a sliding plane. Such a stair climber further comprises means for lifting the tracked device from the sliding plane. Such lifting means comprise a pair of rear in-line swinging wheels and at least one front wheel off-centre with respect to the two rear ones and swinging too. In addition, still such lifting means comprise a drive mechanism able to be activated by the operator, upon operator control, in order to move both the two swinging rear wheels and the swinging front wheel between a rest position, in which the stair climber touches the sliding plane with the tracks, and an operative position, in which the wheels are rested on the sliding plane and able to lift the tracks themselves and the whole frame from the ground. The activation of the drive mechanism is obtained by an electric gearmotor.

Although such a tracked stair climber is provided with a lifting device able to settle the afore mentioned problems, it is rather complex from a structural standpoint and, mostly, it requires actuation systems of electromechanical type that not only increase the stair climber complexity, with consequent increase also in the maintenance periods of the stair climber itself, but also render the use of the stair climber less easy by the operator himself.

US4566550A discloses a stair climber according to the preamble of claim 1. Object of the present invention is to implement a tracked stair climber that is able to facilitate the displacements on the cramped of the stair climber.

Further object of the present invention is to implement a tracked stair climber able to fulfill the afore suggested objects without however increasing the structural complexity thereof, but on the contrary, simplifying both the structure of known stair climbers and the assembly thereof.

### SUMMARY OF THE INVENTION

These and other objects are achieved by a stair climber comprising a supporting frame, a maneuvering tiller constrained to said frame, and a tracked movement device combined with said frame to displace said stair climber along a staircase, or along a sliding plane, said stair climber further comprising lifting means to lift said tracked device from said sliding plane, said lifting means comprising at least one first rear wheel and at least one supporting lever having a first arm to which said at least one first rear wheel is rotatably constrained around a first horizontal axis, said supporting lever being rotatably constrained to said supporting frame around a second horizontal axis and comprising a second arm distinct from said at least one first arm and rotatable around said at least one second horizontal axis, wherein said lifting means comprise at least one second rear wheel constrained to said at least one second arm in a position with respect to said at least one first rear wheel such that said at least one second rear wheel and said at least one first rear wheel are contemporaneously in contact with said sliding plane at least when said maneuvering tiller is subject to a thrust torque to rotate said supporting frame backwards around said second horizontal axis and to lift said tracked device from said sliding plane. Advantageously, said at least one second rear wheel is swivellingly constrained to said at least one second arm.

Such a solution is highly advantageous since it is simple from a structural standpoint and does not require any type of electromechanical activation. In addition, thanks to such a characteristic, when the tracked device is lifted, the stair climber can also be rotated on itself without any difficulty and without this operation requiring additional space.

Preferably, said at least one second rear wheel is arranged at the end of said second arm and said at least one first rear wheel is arranged at the end of said at least one first arm. Therefore, by suitably shaping and sizing the two lever arms it is always possible to cause said at least one first rear wheel and said at least one second rear wheel to be in contact contemporaneously with the sliding plane, at least when the tracked device is lifted and, preferably, also when the tracked device drives the stair climber into motion along a tilted plane.

According to the invention, in addition, said tracked device comprises at least one track. Said at least one track comprises in turn at least one substantially flat lower surface fronting onto said at least one sliding plane and is provided with at least one front portion and at least one back portion, wherein said at least one back portion is lifted from the ground at least when said device slides along said at least one sliding plane so that said lower flat surface is inclined, i.e. not parallel, with respect to said sliding plane. In practice, therefore, when the lower surface of the track is on the plane, differently from what occurs in the tracked stair climbers of known art, it does not touch with all its lower surface but only with the front portion, such that the track will be tilted with respect to the sliding plane. Thus in this embodiment, when the stair climber slides along a plane, it is thus contemporaneously in contact with such a plane by said at least one first rear wheel, said at least one second rear wheel and said front portion of said at least one track.

Such a configuration is highly advantageous since the switching between the stair climber configuration when it slides on the plane and when, still on the plane, the tracked device is lifted by the operator is highly favored. In fact, the rear portion of the lower surface of the tracks will never be stuck against the sliding plane during the rotation of the tracked device thus hampering it from lifting.

In a preferred embodiment, said at least one second rear wheel is in a more rearward position with respect to said at least one first rear wheel.

### BRIEF DESCRIPTION OF THE FIGURES

These and other aspects of the present invention will be clearer to the field technician from the following description of a preferred embodiment of the present invention, provided by way of example and not limiting, with reference to the figures attached, wherein:
figures 1A and 1B show two side views of the tracked stair climber according to the invention respectively, in a sliding position along a plane, and in a lifted position for the tracked device;
figure 1C shows a partial rear view of the tracked stair climber according to the invention;

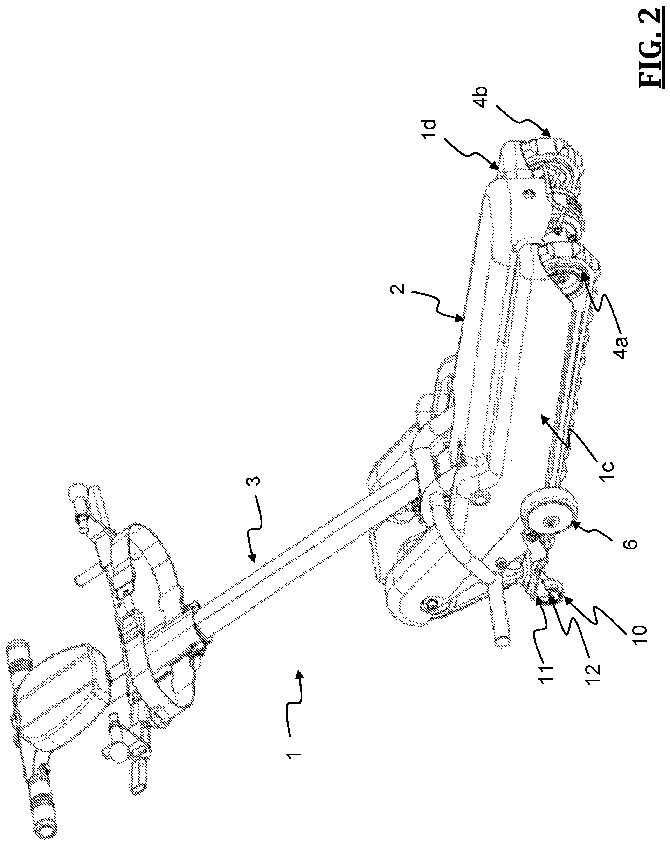

figure 2 shows in axonometric view the stair climber according to the invention;
figures 3A to 3C show in side view the stair climber during the climb along a staircase.

### DETAILED DESCRIPTION OF A PREFERRED EMBODIMENT OF THE PRESENT INVENTION

In reference to the above figures, a stair climber 1 according to the invention is shown.

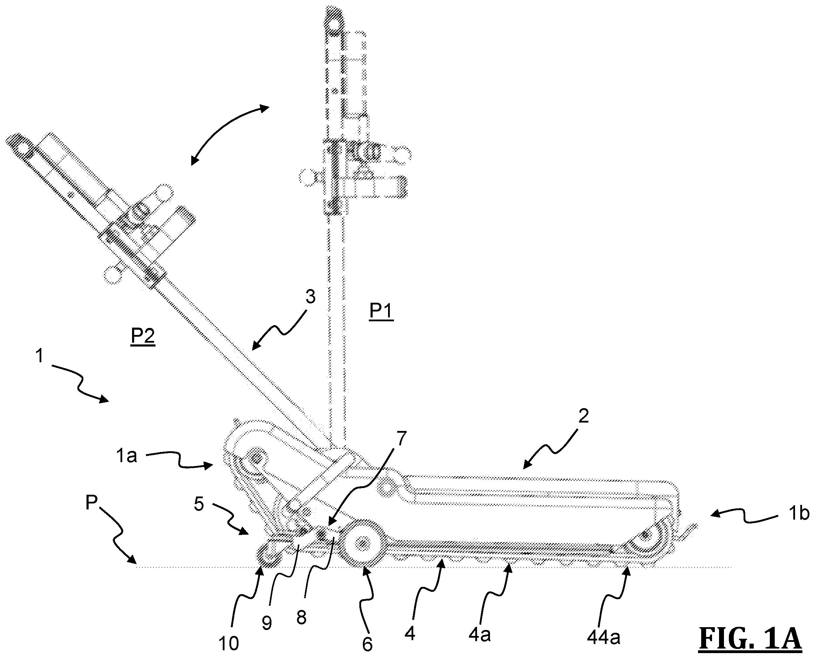

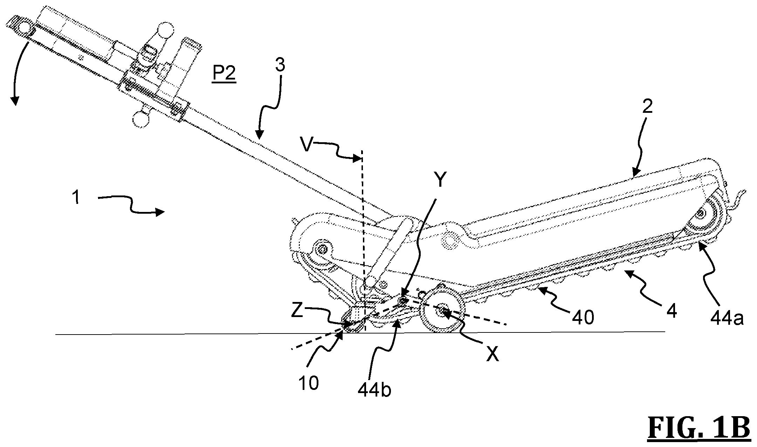

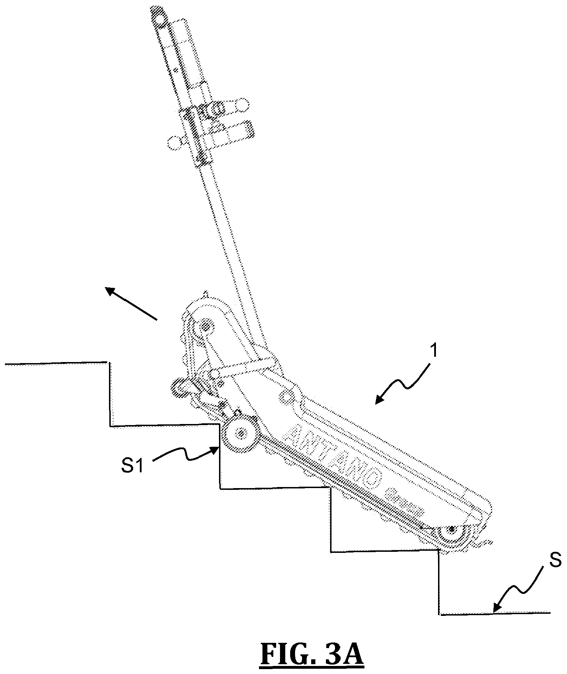

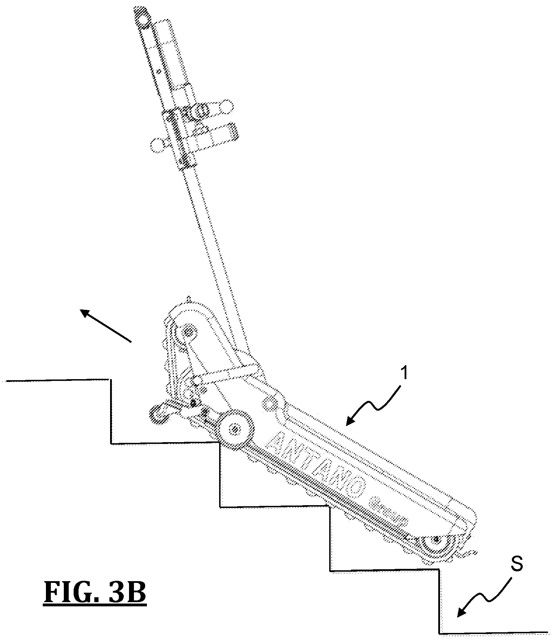

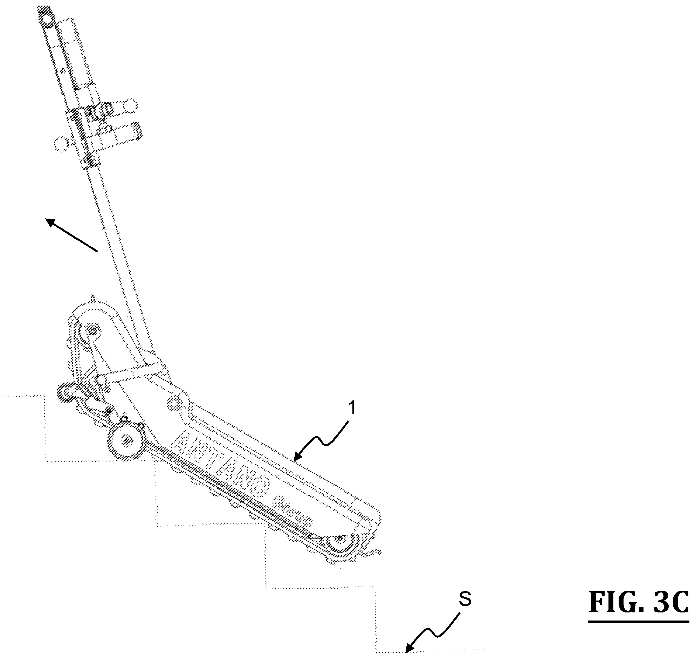

As better seen in figures 1A and 1B, the stair climber 1 comprises a supporting frame 2, a maneuvering tiller 3 constrained to the frame, and a tracked movement device 4 combined with the frame to displace the stair climber 1 along a staircase S (shown in figures 3A to 3C), or along a sliding plane P. It has to be noted that the back portion 1a of the stair climber 1 is at the maneuvering tiller 3, whereas the front portion 1b of the stair climber 1 is at the opposite side with respect to the tiller 3. When the stair climber 1 is therefore caused to slide along a sliding plane P, it moves forward with the front portion 1b, pushed by an operator at the maneuvering tiller 3. Such a tracked device 4 comprises as well a pair of lateral trucks 4a, 4b that are rotated by a gearmotor (not shown herein) coupled with the tracks themselves.

In a known way, the maneuvering tiller 3 is rotatably constrained to the frame between a first non-operative vertical position PI (see figure 1A dashed part) and a second tilted-back operative position P2, to carry a wheelchair (not shown herein) along a staircase S, or along a sliding plane P.

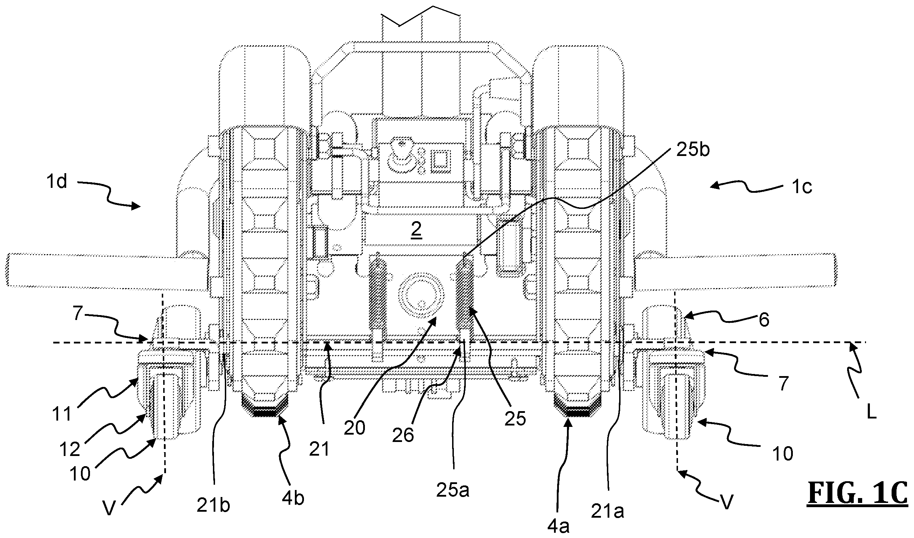

The stair climber 1 further comprises lifting means 5 to at least partially lift the tracked device 4 from the sliding plane P. Such lifting means 5 comprise for each side 1c (visible in figures 1A and 1B) and 1d (visible in figure 1C) of the stair climber 1, a first rear wheel 6 and a supporting lever 7 having a first arm 8 to which the first rear wheel 6 is rotatably constrained around a first horizontal axis X. Each supporting lever 7 is in turn rotatably constrained to the supporting frame 2 around a second horizontal axis Y. According to the invention, each supporting lever 7 also comprises a respective second arm 9 distinct from the first arm 8. Clearly such a second arm 9 is integral with the first arm 8 therefore the latter also rotates around the second horizontal axis Y. In addition, the lifting means 5, always for each side 1c and 1d of the stair climber 1, also comprise a second rear wheel 10 constrained to the respective second arm 9 in such a position with respect to the first rear wheel 6 that the second rear wheel 10 and the first rear wheel 6 are contemporaneously in contact with the sliding plane P when the maneuvering tiller 3 is subject to a thrust torque to rotate the supporting frame 2 backwards around the horizontal axis Y and to lift the tracked device 4 from the sliding plane P. Clearly on both sides 1c and 1d of the stair climber 1 both the second rear wheel 10 and the first rear wheel 6 will be contemporaneously in contact with the sliding plane P, i.e. the four rear wheels 6 and 10 will be in contact with such a plane P.

As visible in figure 1A, according to the embodiment herein described, each track 4a, 4b comprises a lower surface 40 with a substantially planar development (apart from the tracks that create regular transverse projections) fronting onto the sliding plane P. Such a lower surface 40 is further provided with a front portion 44a and a back portion 44b that is lifted from the ground at least when the device slides along the sliding plane P so that the lower surface 40 is tilted with respect to the sliding plane P.

Such a configuration is highly advantageous since the switching is greatly assisted between the configuration of the stair climber 1 when it slides on the sliding plane P and when, still on the plane P, the tracked device 4 is lifted by the operator. In fact, the rear portion 44b of the lower surface 40 of the tracks 4a and 4b will never be stuck against the sliding plane P during the rotation of the tracked device 4, thus hampering it from lifting.

In particular, according to the herein described embodiment, such a second rear wheel 10 is swivellingly constrained to the respective second arm 9. In practice, when the second rear wheel 10 is on the ground, besides rotating on itself around a third horizontal axis Z it also rotates around a vertical axis V.

As visible in the attached figures, the firs arm 8 and the second arm 9 of each supporting lever 7 are arranged at opposite sides with respect to the second rotation axis Y.

In addition, for each supporting lever 7, the second rear wheel 10 is arranged at the end 9a of the second arm 9 and the first rear wheel 6 is arranged at the end 8a of the first arm 8. Moreover, the second rear wheel 10 is in a more rearward position with respect to the first rear wheel 6. It has to be noted that the second rear wheel 10 is obtained in a known way by connecting it to a shell 11 by means of a rotation shaft 21 coaxial to the third horizontal axis Z. The shell 11, in turn, is rotatably constrained to the end 9a of the second arm 9 around the afore mentioned vertical axis V. This allows the second wheel 10 to swivel.

Still according to the invention, the lifting means 5 comprise elastic pushing means 20 to rotate the two supporting levers 7 to such a position that the two first rear wheels 6 are continuously pressed into contact with the sliding plane P. Thus, in the herein described embodiment, such elastic means 20 continuously push the two supporting levers 7 to rotate clockwise.

As visible in figure 1C, the lifting means 5 comprise a hexagonal rotation shaft 21 having rotation axis L coincident with the second axis Y. Preferably, the two supporting levers 7 are rotationally constrained to the respective two ends 21a and 21b of the rotation shaft 21. The elastic pushing means 20 comprise two distinct helical springs 25. Each helical spring 25 is rotatably constrained, at a first end 25a, to the rotation shaft 21 and, at a second end 25b, to the supporting frame 2. In particular, the first end 25a of each spring 25 is constrained to a projection 26 of the rotation shaft 21. Such a projection 26 is arranged transversely to the rotation axis L such that the spring 25 is able to generate a torque on the rotation shaft 21 such that the two supporting levers 7 are continuously pressed against the sliding plane P during all the operating steps of the stair climber 1.

Figures 1A and 1B show the operation of the stair climber 1 in two distinct steps. Figure 1A, in particular, shows the stair climber 1 before the tracked movement device 4 is completely lifted from the ground. In such a position both the second rear wheel, the swivelling one, 10 and the first rear wheel 6 are in contact with the sliding plane P, while the tracks 4a and 4b touch the sliding plane P with their front portion 44a dragging the stair climber 1 along the same sliding plane P. In particular, it has to be noted that the back portion 44b of the lower surface 40 of the tracks 4a and 4b, also when the stair climber 1 moves on the sliding plane P, does not touch the sliding plane P. In practice, the tracks 4a and 4b, or better their lower surface 40, are slightly tilted forward such to be with the back portion 44b always slightly lifted from the sliding plane P and with the front portion 44a in contact with the sliding plane P to drag the stair climber 1 along the sliding plane P. This clearly favors the step of lifting the tracked device 4 since the back portion 4b of the tracks 4a and 4b will never be stuck against the sliding plane P during the rotation of the tracked device 4.

Figure 1B shows the stair climber rotated by an operator around the second axis Y with the two second rear wheels 10 and the first two rear wheels 6 in contact with the sliding plane P and the tracked device 4 lifted from the ground. In such a position, the operator pushing the stair climber 1 thanks to the maneuvering tiller 3, from the back side 1a of the stair climber 1, can also cause the stair climber 1 to rotate on itself without any difficulties, as if it were a normal trolley, also because the back portion 44b of the tracks 4a and 4b of the tracked device 4 does never touch the sliding plane P during the lifting operation. This easily allows the operator to make very narrow bends also in cramped spaces and effortlessly. Such operations, on the other hand, are carried out with maximum security for the person being on the wheelchair constrained in turn to the maneuvering tiller 3 of the stair climber 1.

It has to be noticed that the thrust torque to which the tiller is subject and that causes the supporting frame 2 to rotate backwards around the second horizontal axis Y is exerted by the user when the maneuvering tiller 3 is in its second tilted-back position P2, i.e. in its operative position.

Figures 3A to 3C show the stair climber 1 while it climbs a staircase S. In such figures it can be seen how the lever 7 rotates around the second axis Y depending on the second swivelling wheel 10 or the first rear wheel 6 being in contact with a step of the staircase S. When climbing, the stair climber 1 is displaced backwards, in the direction of the back portion 1a of the stair climber 1, whereas when descending, the stair climber 1 is pushed by the operator in the direction of the front side 1b of the stair climber 1.

## Claims

1. Stair climber (1) comprising a supporting frame (2), a maneuvering tiller (3) constrained to said frame, and a tracked movement device (4) combined with said frame to displace said stair climber along a staircase (S), or along a sliding plane (P), said stair climber further comprising lifting means (5) to lift said tracked device (4) from said sliding plane (P), said lifting means comprising at least one first rear wheel (6) and at least one supporting lever (7) having a first arm (8) to which said at least one first rear wheel is rotatably constrained around a first horizontal axis (X), said supporting lever (7) being rotatably constrained to said supporting frame around a second horizontal axis (Y), wherein said supporting lever (7) comprises a second arm (9) distinct from said at least one first arm (8) and rotatable around said at least one second horizontal axis (Y), and wherein said lifting means further comprise at least one second rear wheel (10) constrained to said at least one second arm (9) in a position with respect to said at least one first rear wheel such that said at least one second rear wheel (10) and said at least one first rear wheel (6) are contemporaneously in contact with said sliding plane (P) at least when said maneuvering tiller (3) is subject to a thrust torque to rotate said supporting frame (2) backwards around said second horizontal axis (Y) and to lift said tracked device (4) from said sliding plane (P), **characterized in that** said at least one second rear wheel (10) is swivellingly constrained to said at least one second arm (9).

2. Stair climber according to claim 1, **characterized in that** said at least one first arm (8) and said at least one second arm (9) are arranged at opposite sides with respect to said second rotation axis (Y).

3. Stair climber according to one or more of claims 1 to 2, **characterized in that** said at least one second rear wheel (10) is arranged at the end (9a) of said second arm (9).

4. Stair climber according to one or more of claims 1 to 3, **characterized in that** said at least one first rear wheel (6) is arranged at the end (8a) of said at least one first arm (8).

5. Stair climber according to one or more of claims 1 to 4, **characterized in that** said at least one second rear wheel (10) is in a more rearward position with respect to said at least one first rear wheel (6).

6. Stair climber according to one or more of claims 1 to 5, **characterized in that** said lifting means comprise elastic pushing means (20) to rotate said supporting lever (7) to such a position that said at least one first rear wheel (6) is pressed continuously in contact with said sliding plane (P).

7. Stair climber according to claim 6, **characterized in that** said lifting means (5) comprise a rotation shaft (21) having rotation axis (L) coaxial to said second axis (Y), said at least one supporting lever (7) being constrained to one end (21a) of said rotation shaft (21).

8. Stair climber according to claim 6 or 7, **characterized in that** said elastic pushing means (20) comprise at least one helical spring (25), said helical spring being rotatably constrained, at a first end (25a), directly or indirectly, to said rotation shaft (21) and, at a second end (25b), to said supporting frame (2).

9. Stair climber according to one or more of claims 1 to 8, **characterized in that** said tracked device (4) comprises at least one track (4a), said at least one track (4a) comprising at least one substantially flat lower surface (40) fronting onto said at least one sliding plane (P) and is provided with at least one front portion (44a) and at least one back portion (44b), said at least one back portion (44b) being lifted from the ground at least when said device slides along said at least one sliding plane (P) so that said lower surface (40) is tilted with respect to said sliding plane (P).

10. Stair climber according to one or more of claims 1 to 9, **characterized in that** said maneuvering tiller (3) is rotatably constrained to said supporting frame (2) between a first non-operative vertical position (P1) and a second operative tilted-back position (P2), to carry a wheelchair along a staircase (S), or along a sliding plane (P), said thrust torque to rotate backwards said supporting frame (2) around said second horizontal axis (Y) being exerted by the user at least when said maneuvering tiller (3) is in said second tilted-back position (P2).

## Patentansprüche

1. Treppensteiger (1), aufweisend einen Stützrahmen (2), eine an den Rahmen gezwungene Manövrierpinne (3) und eine mit dem Rahmen kombinierte Raupenbewegungsvorrichtung (4) zum Verschieben des Treppensteigers entlang einer Treppe (S) oder entlang eine Gleitebene (P), wobei der Treppensteiger ferner Hebemittel (5) zum Anheben der Raupenvorrichtung (4) von der Gleitebene (P) aufweist, wobei die Hebemittel mindestens ein erstes Hinterrad (6) und mindestens einen Stützhebel (7) mit einem ersten Arm (8) umfassen, an den das mindestens eine erste Hinterrad drehbar um eine erste horizontale Achse (X) gezwungen ist, wobei der Stützhebel (7) drehbar an den Stützrahmen um eine zweite horizontale Achse (Y) gezwungen ist, wobei der Stützhebel (7) einen zweiten Arm (9) umfasst, der von dem mindestens einen ersten Arm (8) verschieden ist und der um die mindestens eine zweite horizontale Achse (Y) drehbar ist, und wobei die Hebemittel ferner mindestens ein zweites Hinterrad (10) umfassen, das an den mindestens einen zweiten Arm (9) in einer Position in Bezug auf das mindestens eine erste Hinterrad gezwungen ist, so dass das mindestens eine zweite Hinterrad (10) und das mindestens eine erste Hinterrad (6) gleichzeitig in Kontakt mit der Gleitebene (P) sind, zumindest dann, wenn die Manövrierpinne (3) einem Schubdrehmoment ausgesetzt ist, um den Stützrahmen (2) rückwärts um die zweite horizontale Achse (Y) zu drehen und die Raupenvorrichtung (4) von der Gleitebene (P) anzuheben, **dadurch gekennzeichnet, dass** das mindestens eine zweite Hinterrad (10) schwenkbar an den mindestens einen zweiten Arm (9) gezwungen ist.

2. Treppensteiger nach Anspruch 1, **dadurch gekennzeichnet, dass** der mindestens eine erste Arm (8) und der mindestens eine zweite Arm (9) in Bezug auf die zweite Drehachse (Y) auf gegenüberliegenden Seiten angeordnet sind.

3. Treppensteiger nach einem oder mehreren der Ansprüche 1 bis 2, **dadurch gekennzeichnet, dass** das mindestens eine zweite Hinterrad (10) am Ende (9a) des zweiten Arms (9) angeordnet ist.

4. Treppensteiger nach einem oder mehreren der Ansprüche 1 bis 3, **dadurch gekennzeichnet, dass** das mindestens eine erste Hinterrad (6) am Ende (8a) des mindestens einen ersten Arms (8) angeordnet ist.

5. Treppensteiger nach einem oder mehreren der Ansprüche 1 bis 4, **dadurch gekennzeichnet, dass** sich das mindestens eine zweite Hinterrad (10) in Bezug auf das mindestens eine erste Hinterrad (6) in einer rückwärtigeren Position befindet.

6. Treppensteiger nach einem oder mehreren der Ansprüche 1 bis 5, **dadurch gekennzeichnet, dass** die Hebemittel elastische Schubmittel (20) umfassen, um den Stützhebel (7) in eine solche Position zu drehen, dass das mindestens eine erste Hinterrad (6) kontinuierlich in Kontakt mit der Gleitebene (P) gedrückt ist.

7. Treppensteiger nach Anspruch 6, **dadurch gekennzeichnet, dass** die Hebemittel (5) eine Rotationswelle (21) mit einer Rotationsachse (L) koaxial zu der zweiten Achse (Y) umfassen, wobei der mindestens eine Stützhebel (7) an ein Ende (21a) der Rotationswelle (21) gezwungen ist.

8. Treppensteiger nach Anspruch 6 oder 7, **dadurch gekennzeichnet, dass** die elastischen Druckmittel (20) mindestens eine Schraubenfeder (25) umfassen, wobei die Schraubenfeder an einem ersten Ende (25a) direkt oder indirekt drehbar an die Rotationswelle (21) und an einem zweiten Ende (25b) an den Stützrahmen (2) gezwungen ist.

9. Treppensteiger nach einem oder mehreren der Ansprüche 1 bis 8, **dadurch gekennzeichnet, dass** die Raupenvorrichtung (4) mindestens eine Schiene (4a) umfasst, wobei die mindestens eine Schiene (4a) mindestens eine im Wesentlichen flache untere Oberfläche (40) umfasst, die der mindestens einen Gleitebene (P) gegenüberliegt und mit mindestens einem vorderen Abschnitt (44a) und mindestens einem hinteren Abschnitt (44b) versehen ist, wobei der mindestens eine hintere Abschnitt (44b) mindestens dann vom Boden abgehoben ist, wenn die Vorrichtung entlang der mindestens einen Gleitebene (P) gleitet, so dass die untere Fläche (40) in Bezug auf die Gleitebene (P) geneigt ist.

10. Treppensteiger nach einem oder mehreren der Ansprüche 1 bis 9, **dadurch gekennzeichnet, dass** die Manövrierpinne (3) drehbar an dem Stützrahmen (2) zwischen einer ersten nicht betriebsbereiten vertikalen Position (P1) und einer zweiten betriebsbereiten, nach hinten geneigten Position (P2) gezwungen ist, um einen Rollstuhl entlang einer Treppe (S) oder entlang einer Gleitebene (P) zu tragen, wobei das Schubdrehmoment zum Rückwärtsdrehen des Stützrahmens (2) um die zweite horizontale Achse (Y) durch den Benutzer ausgeübt ist, zumindest dann, wenn sich die Manövrierpinne (3) in der zweiten nach hinten geneigten Position (P2) befindet.

## Revendications

1. Monte-escalier (1) comprenant un cadre de support (2), une barre de manœuvre (3) contrainte audit cadre, et un dispositif de déplacement à chenilles (4) combiné audit cadre pour déplacer ledit monte-escalier le long d'un escalier (S), ou le long d'un plan de coulissement (P), ledit monte-escalier comprenant en outre des moyens de levage (5) pour soulever ledit dispositif à chenilles (4) dudit plan de coulissement (P), lesdits moyens de levage comprenant au moins une première roue arrière (6) et au moins un levier de support (7) ayant un premier bras (8) auquel ladite au moins une première roue arrière est contrainte de manière rotative autour d'un premier axe horizontal (X), ledit levier de support (7) étant contraint de manière rotative audit cadre de support autour d'un second axe horizontal (Y), dans lequel ledit levier de support (7) comprend un second bras (9) distinct dudit au moins un premier bras (8) et pouvant tourner autour dudit au moins un second axe horizontal (Y), et dans lequel lesdits moyens de levage comprennent en outre au moins une seconde roue arrière (10) contrainte audit au moins un second bras (9) dans une position par rapport à ladite au moins une première roue arrière de telle sorte que ladite au moins une seconde roue arrière (10) et ladite au moins une première roue arrière (6) soient simultanément en contact avec ledit plan de coulissement (P) au moins lorsque ladite barre de manœuvre (3) est soumise à un couple de poussée pour faire tourner ledit cadre de support (2) vers l'arrière autour dudit second axe horizontal (Y) et pour soulever ledit dispositif à chenilles (4) dudit plan de coulissement (P), **caractérisé en ce que** ladite au moins une seconde roue arrière (10) est contrainte de manière pivotante audit au moins un second bras (9).

2. Monte-escalier selon la revendication 1, **caractérisé en ce que** ledit au moins un premier bras (8) et ledit au moins un second bras (9) sont disposés sur des côtés opposés par rapport audit second axe de rotation (Y).

3. Monte-escalier selon une ou plusieurs des revendications 1 à 2, **caractérisé en ce que** ladite au moins une seconde roue arrière (10) est disposée à l'extrémité (9a) dudit second bras (9).

4. Monte-escalier selon une ou plusieurs des revendications 1 à 3, **caractérisé en ce que** ladite au moins une première roue arrière (6) est disposée à l'extrémité (8a) dudit au moins un premier bras.

5. Monte-escalier selon une ou plusieurs des revendications 1 à 4, **caractérisé en ce que** ladite au moins une seconde roue arrière (10) est dans une position vers l'arrière par rapport à ladite au moins une première roue arrière (6).

6. Monte-escalier selon une ou plusieurs des revendications 1 à 5, **caractérisé en ce que** lesdits moyens de levage comprennent des moyens de poussée élastiques (20) pour faire tourner ledit levier de support (7) dans une position telle que ladite au moins une première roue arrière (6) est pressée continuellement en contact avec ledit plan de coulissement (P).

7. Monte-escalier selon la revendication 6, **caractérisé en ce que** lesdits moyens de levage (5) comprennent un arbre de rotation (21) ayant un axe de rotation (L) coaxial audit second axe (Y), ledit au moins un levier de support (7) étant contraint à une extrémité (21a) dudit arbre de rotation (21).

8. Monte-escalier selon la revendication 6 ou 7, **caractérisé en ce que** lesdits moyens de poussée élastiques (20) comprennent au moins un ressort hélicoïdal (25), ledit ressort hélicoïdal étant contraint de manière rotative, à une première extrémité (25a), directement ou indirectement, audit arbre de rotation (21) et, à une seconde extrémité (25b), audit cadre de support (2).

9. Monte-escalier selon une ou plusieurs des revendications 1 à 8, **caractérisé en ce que** ledit dispositif à chenilles (4) comprend au moins une chenille (4a), ladite au moins une chenille (4a) comprenant au moins une surface inférieure (40) sensiblement plate faisant face audit au moins un plan de coulissement (P) et est pourvue d'au moins une partie avant (44a) et d'au moins une partie arrière (44b), ladite au moins une partie arrière (44b) étant soulevée du sol au moins lorsque ledit dispositif glisse le long dudit au moins un plan de coulissement (P) de sorte que ladite surface inférieure (40) est inclinée par rapport audit plan de coulissement (P).

10. Monte-escalier selon une ou plusieurs des revendications 1 à 9, **caractérisé en ce que** ladite barre de manœuvre (3) est contrainte de manière rotative audit cadre de support (2) entre une première position verticale non opérationnelle (P1) et une seconde position inclinée vers l'arrière opérationnelle (P2), pour transporter un fauteuil roulant le long d'un escalier (S), ou le long d'un plan de coulissement (P), ledit couple de poussée pour faire tourner vers l'arrière ledit cadre de support (2) autour dudit second axe horizontal (Y) étant exercé par l'utilisateur au moins lorsque ladite barre de manœuvre (3) est dans ladite seconde position inclinée vers l'arrière (P2).
